# EUROPEAN PATENT SPECIFICATION

(11) **EP 4 376 151 B1**
(45) Date of publication and mention of the grant of the patent: **27.05.2026**
(21) Application number: 22844874.2
(22) Date of filing: 24.03.2022
(51) Int. Cl.: H01M 10/04, H01M 10/0583, B32B 37/22

(54) **THERMAL COMPOSITE LAMINATION DEVICE**
THERMISCHE VERBUNDLAMINIERUNGSVORRICHTUNG
DISPOSITIF DE STRATIFICATION COMPOSITE THERMIQUE

(30) Priority: 23.07.2021 CN 202110839242
(43) Date of publication of application: 29.05.2024
(73) Proprietor: SVOLT ENERGY TECHNOLOGY CO., LTD, Changzhou, Jiangsu 213200 (CN)
(72) Inventor: ZHAO, Kai, Changzhou, Jiangsu 213200 (CN); WANG, Chang, Changzhou, Jiangsu 213200 (CN); WANG, Xiao, Changzhou, Jiangsu 213200 (CN); LI, Kunpeng, Changzhou, Jiangsu 213200 (CN)
(74) Representative: Michalski Hüttermann & Partner Patentanwälte mbB
(86) International application number: PCT/CN2022/082795
(87) International publication number: WO 2023/000702

(56) References cited:
- WO-A1-2020/180028
- WO-A1-2020/203115
- CN-A- 110 165 147
- CN-A- 110 380 130
- CN-A- 113 013 471
- CN-A- 113 555 595
- CN-A- 114 050 320
- YOSHIO MASAKI ET AL: "Lithium-Ion Batteries", 31 December 2009 (2009-12-31), XP093262409, Retrieved from the Internet <URL:https://d1wqtxts1xzle7.cloudfront.net/54268067/Yoshio_M.__Brodd_R.J.__Kozawa_A._eds._Lithium-ion_batteries_Springer__2009ISBN_0387344446O460s_Ch_-libre.pdf?1503940161=&response-content-disposition=inline;+filename=Yoshio_M_Brodd_R_J_Kozawa_A_eds_Lithium.pdf&Expires=1742808816&Signature=X8lxBJDQHn6Z0>

## Description

### TECHNICAL FIELD

The present application relates to the field of battery manufacturing equipment, such as a thermal composite lamination device and a thermal composite lamination method.

### BACKGROUND

Lithium-ion batteries have the advantages of high energy density, wide operating temperature range, superior cycle performance, and the absence of toxic and harmful substances. They are widely used as power batteries for automobiles. During the manufacturing process of lithium-ion batteries, it is necessary to separate the electrode plates of different polarity using a membrane, and then combine the electrode plates and the membrane using a hot pressing method to form a strip. The strip is then stacked together using a Z-type lamination technique.

In related technologies, when the electrode plate and the membrane are hot pressed together, the electrode plate is usually first covered onto the membrane (or the membrane is covered onto the electrode plate), and then the overlapped electrode plate and membrane are heated and pressed together. In this way, during the heating and pressing process, in order to ensure that the membrane and the electrode plate may adhere well together, it is necessary to ensure a sufficiently long heating length of the material strip and a sufficiently large heating power. Large heating power will lead to more heat loss, and a longer heating length of the material strip will lead to insufficient compactness of the composite lamination device and low production efficiency.

CN 113 013 471, WO 2020/180028 and Yoshio Masaki et al.: "Lithium-Ion Batteries", XP093262409" are examples of thermal composite lamination device

### SUMMARY

The present application proposes a thermal composite lamination device that features low energy loss, compact structure, and high production efficiency.

The present application disclose a thermal composite lamination method that enables low energy loss and high efficiency during the composite lamination process, and is conducive to compacting the structure of thermal composite lamination equipment.

A thermal composite lamination device according to the present invention comprises:
a first rolling mechanism;
a second rolling mechanism;
a main conveying mechanism configured to convey paired membranes along a preset trajectory such that paired membranes sequentially pass through the first rolling mechanism and the second rolling mechanism;
a first conveying mechanism configured to feed preheated first electrode plates having a predetermined size into the first rolling mechanism, and to clamp the first electrode plates between the paired membranes;
a heating and conveying mechanism disposed between the first rolling mechanism and the second rolling mechanism, configured to combine the paired membranes and the first electrode plate into an intermediate composite;
a second conveying mechanism configured to feed a preheated second electrode plate having a predetermined size into the second rolling mechanism, and locate the second electrode plate outside the paired membranes, the second rolling mechanism configured to press the second electrode plate and the intermediate composite into a material strip,
along with all the remaining features of claim 1.

A thermal composite lamination method, however not according to the claimed invention, is disclosed, comprising:
providing a first electrode plate that has been preheated and has a preset size;
providing paired membranes, and positioning the paired membranes on both sides of the first electrode plate;
heating the paired membranes and combining the paired membranes and the first electrode plate into an intermediate composite;
providing a preheated second electrode plate having a preset size to one side of the intermediate composite;
pressing the second electrode plate and the intermediate composite into a material strip, wherein the material strip has alternately arranged membrane segments and unit pieces;
folding the material strip to stack the unit pieces of the material strip in sequence, wherein the membrane segments are located at both ends of the unit pieces.

A battery cell produced by the above-mentioned thermal composite lamination method, however not according to the claimed invention, is also disclosed.

### BRIEF DESCRIPTION OF THE DRAWINGS

Figure 1 is a structural schematic view of a thermal composite lamination device provided in the embodiment of this application;
Figure 2 is an enlarged view of A in Figure 1;
Figure 3 is a partial schematic view of a laminating mechanism provided in the embodiment of this application;
Figure 4 is a flowchart of a thermal composite lamination method, however not according to the claimed invention.

In the figure:
100-first electrode plate; 200-second electrode plate; 300-membrane; 400-intermediate composite; 500-material strip; 501-membrane segment; 502-unit piece; 5021-first type unit piece; 5022-second type unit piece;
1- first rolling mechanism; 11- first pressing roller;
2-second rolling mechanism; 21-second pressing roller;
3- main conveying mechanism;
4- first conveying mechanism; 41- first conveying roller; 42- first heating assembly; 43- first cutting assembly; 44- first defect detection assembly; 45- first deviation-correction assembly; 46-first marking assembly; 47- first identification assembly;
5-second conveying mechanism; 51-second conveying roller; 52-second heating assembly; 53-second cutting assembly; 54-second defect detection assembly; 55-second deviation-correction assembly; 56-second marking assembly; 57-second identification assembly;
6-heating conveying mechanism; 61-conveying belt; 62-heating element;
7-laminating mechanism; 71-material box; 72-blowing assembly; 73-reflector; 74-position detection assembly;
81-third defect detection assembly; 811-panoramic detection element; 812-short circuit detection element; 82- rejecting assembly;
9-patch mechanism; 91-supplement cartridge; 92-alignment platform;
10-rolling dust-sticking mechanism; 101-primary dust-sticking roller; 102-secondary dust-sticking roller.

### DETAILED DESCRIPTION OF EMBODIMENTS

The following describes the present application in conjunction with the accompanying drawings and embodiments. The specific embodiments described here are only used to explain the present application. For ease of description, only the parts related to the present application are shown in the drawings.

In the description of this application, unless otherwise specified and defined, the terms "connected", "connection", and "fixed" should be broadly understood, for example, they may be fixed connections, removable connections, or integrated; they may be mechanical connections, electrical connections; they may be directly connected, or indirectly connected through intermediate media; they may be internal communication between two elements or interaction between two elements. For those of ordinary skill in the art, the meaning of the above terms in this application may be understood according to the circumstances.

In this application, unless otherwise specified and defined, the first feature may be on or below the second feature, which may include direct contact between the first and second features, or may include contact between the first and second features through other features between them. Moreover, the first feature being on, up, and above the second feature includes the first feature being directly above and obliquely above the second feature, or simply indicates that the first feature is higher in horizontal height than the second feature. The first feature being below, down, and under the second feature includes the first feature being directly below and obliquely below the second feature, or simply indicates that the first feature is lower in horizontal height than the second feature.

In the description of this embodiment, the terms "up", "down", "right", and other orientational and positional relationships are based on the orientational and positional relationships shown in the drawings, and are only for ease of description and simplification of operation, rather than indicating or implying that the devices or elements referred to must have a specific orientation, be constructed and operated in a specific orientation. Therefore, they maynot be understood as limitations on this application. In addition, the terms "first" and "second" are only used for distinction in description and have no special meaning.

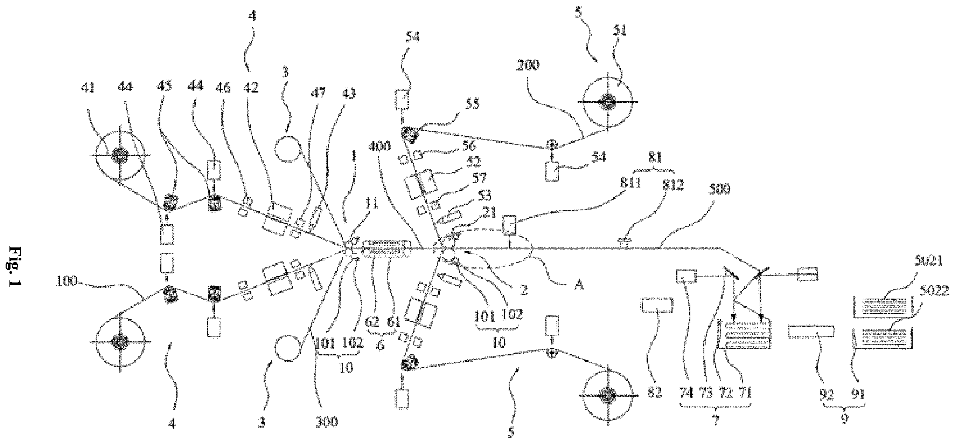

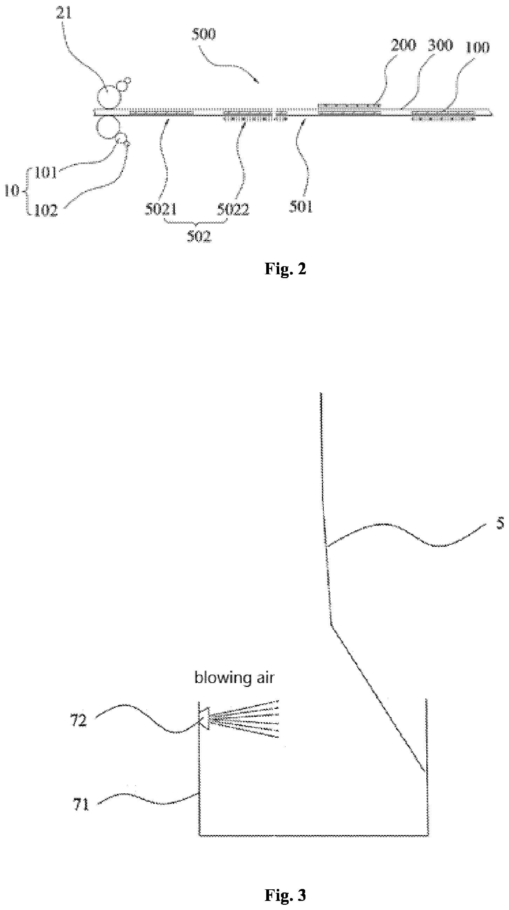

This embodiment provides a thermal composite lamination device, which may be applied in the production process of lithium-ion batteries. As shown in Figure 1 and Figure 2, the thermal composite lamination device includes a first rolling mechanism 1, a second rolling mechanism 2, a main conveying mechanism 3, a first conveying mechanism 4, a heating conveying mechanism 6, a second conveying mechanism 5, and a laminating mechanism 7. The main conveying mechanism 3 may convey paired membranes 300 along a preset trajectory. The paired membranes 300 pass through the first rolling mechanism 1 and the second rolling mechanism 2 in sequence until they are located above the laminating mechanism 7. The first conveying mechanism 4 may send the preheated first electrode plate 100 with a preset size into the first rolling mechanism 1, and place the first electrode plate 100 between the paired membranes 300. The heating conveying mechanism 6 is disposed between the first rolling mechanism 1 and the second rolling mechanism 2, and may combine the membranes 300 and the first electrode plate 100 into an intermediate composite 400. The second conveying mechanism 5 may send the preheated second electrode plate 200 with a preset size into the second rolling mechanism 2, and place the second electrode plate 200 outside the membranes 300. The second rolling mechanism 2 presses the second electrode plate 200 and the intermediate composite 400 into a material strip 500. Among them, the strip 500 includes alternately arranged membrane segments 501 and unit pieces 502. In this embodiment, the inner side of the membrane 300 represents the side where the paired membranes 300 face each other, and the outer side of the membrane 300 represents the side where the membrane 300 faces away from the other membrane 300. Both sides of the membrane 300 are coated with a glue layer. When the membrane 300 is heated, the viscosity of the glue layer greatly increases, allowing it to adhere to the first electrode plate 100 and the second electrode plate 200.

In the thermal composite lamination device of this embodiment, before the first electrode plate 100 is fed into the first rolling mechanism 1, it is preheated. Therefore, when the first electrode plate 100 comes into contact with the membrane 300, it begins to heat the glue layer on the inside of the membrane 300. When the membrane 300 reaches the heating and conveying mechanism 6, it is assisted by the heating and conveying mechanism 6 to heat the membrane 300 from the outside, making the membrane 300 heat up and become sticky more quickly, thereby shortening the length of the heating and conveying mechanism 6, reducing the heating power required by the heating and conveying mechanism 6, and making the overall structure of the thermal composite lamination device more compact and efficient. The second electrode plate 200 is also preheated before entering the second rolling mechanism 2. Based on the heating of the glue layer on the outside of the membrane 300 by the heating and conveying mechanism 6, the second electrode plate 200 may heat the membrane 300, so that the intermediate composite 400 and the second electrode plate 200 may be directly combined into a material strip 500 at the second rolling mechanism 2. Therefore, it is not necessary to provide a following heating structure at the second rolling mechanism 2, thus ensuring the compactness of the overall structure of the thermal composite lamination device. In addition, the heating of the membrane 300 by the preheated first electrode plate 100 from the inside to the outside and the reduction of power during the hot pressing process of the intermediate composite 400 are both beneficial to reducing heat loss during the entire hot pressing process. The heating temperature is 40-150 degrees Celsius, and the hot pressing plate needs to be resistant to high temperatures and made of a material that is not easily deformed and has a high ignition point at high temperatures. The temperature rise time from room temperature to working temperature is 5-30 minutes.

In this embodiment, as shown in Figure 1 and Figure 2, the first electrode plate 100 is a negative electrode plate, and the second electrode plate 200 is a positive electrode plate. The material strip 500 pressed by the second rolling mechanism 2 is folded in a Z-shape to form a stack. The unit pieces 502 are stacked from top to bottom, and the membrane segments 501 are located at both ends of the unit pieces 502 and connect the upper and lower adjacent unit pieces 502. When the battery is a lithium iron phosphate battery, a ternary battery, or a cobalt-free battery, the negative electrode sheet needs to coat the positive electrode sheet. In this embodiment, the unit pieces 502 include two types. The first type of unit piece 5021 only includes paired membranes 300 and a first electrode plate 100 clamped between the paired membranes 300. The second type of unit piece 5022 sequentially includes a second electrode plate 200, a membrane 300, a first electrode plate 100, and a membrane 300 (or sequentially includes a membrane 300, a first electrode plate 100, a membrane 300, and a second electrode plate 200). The first type of unit piece 5021 is arranged on the uppermost or lowermost layer of the entire stack, ensuring that the entire stack has a structure in which the negative electrode covers the positive electrode. In other embodiments, the first electrode plate 100 may be a positive electrode plate and the second electrode plate 200 may be a negative electrode plate, which may be flexibly selected according to the specific type of battery. The dimensions of adjacent electrode plates with opposite polarities may vary by 0.5-5mm, and the width of the membrane in the running direction of the strip is 1-10mm greater than the width of the electrode plate.

The thermal composite lamination device includes two sets of first conveying mechanisms 4, which may alternately feed the first electrode plates 100 into the first conveying mechanisms 4. When one set of first conveying mechanisms 4 is heating and cutting the first electrode plate 100 into a preset size, the other set of first conveying mechanisms 4 may convey the first electrode plate 100, which is preheated and cut into a preset size, into the first rolling mechanism 1, thus greatly improving the work efficiency of the thermal composite lamination device. In this embodiment, the structures of the two sets of first conveying mechanisms 4 are completely identical. The thermal lamination equipment includes two sets of second conveying mechanisms 5, which are arranged on both sides of the intermediate composite 400 and may alternately feed the second electrode plate 200 to the second conveying mechanisms 5. The second electrode plates 200 conveyed by the two second conveying mechanisms 5 are located on the outside of the two membranes 300, respectively. In this embodiment, the second electrode plates 200 are not continuously distributed on both surfaces of the intermediate composite 400, and the second electrode plates 200 are asymmetrically distributed on both sides of the intermediate composite 400. On the one hand, when one set of second conveying mechanisms 5 is heating and cutting the second electrode plate 200 to a preset size, the other set of second conveying mechanisms 5 may convey the second electrode plate 200, which is preheated and cut into a preset size, to the second rolling mechanism 2, thereby greatly improving the work efficiency of the thermal composite lamination device. On the other hand, the two second conveying mechanisms 5 convey the second electrode plates 200 to the two sides of the intermediate composite 400, respectively, so that the orientation of the formed second unit pieces 5022 of the second type is alternately set to be positive and negative, and ultimately ensures that after the strip 500 is folded in a Z shape, all the second unit pieces 502 have the same orientation. The "alternating positive and negative" arrangement of the second unit piece 5022 of the second type means that the second electrode plate 200 of one second unit piece 5022 of the second type is located on the upper side (i.e., from top to bottom: the second electrode plate 200, the membrane 300, the first electrode plate 100, the membrane 300), and the second electrode plate 200 of its adjacent second unit piece 5022 is located on the lower side (i.e., from top to bottom: the membrane 300, the first electrode plate 100, the membrane 300, the second electrode plate 200). The rolling pressure is 100-1200kg, the diameter of the pressing roller is greater than 80mm and less than 350mm, and the surface of the pressing roller needs to be treated with an anti-adhesion coating.

The main conveying mechanism 3 includes a membrane discharging roller disposed upstream of the first rolling mechanism 1 and a drive roller (not shown) disposed downstream of the second rolling mechanism 2. The drive roller and the membrane discharging roller cooperate to drive the membrane 300 (including the intermediate composite 400 and the strip 500 formed by the membrane 300) to move along a predetermined trajectory. The main conveying mechanism 3 includes two membrane discharging rollers, which are located on either side of the first electrode plate 100, each conveying one membrane correspondingly.

The heating and conveying mechanism 6 includes two conveying belts 61 disposed on the two sides of the paired membranes 300, respectively, which rotate in opposite directions to assist in driving the membranes 300 to move. The conveying belts 61 are provided with heating elements 62, which may heat the membranes 300. The heating elements 62 may be any of the related technologies, and are not limited here.

In this embodiment, as shown in Figure 1, the first conveying mechanism 4 includes a first conveying roller 41, a first heating assembly 42, a first cutting assembly 43, and a first manipulator. The first conveying roller 41 is configured to convey the continuous first electrode plate 100 to the first cutting assembly 43. The first cutting assembly 43 is configured to cut the first electrode plate 100 into a preset size. The first manipulator is configured to feed the first electrode plate 100 having the preset size into the first rolling mechanism 1. The first heating assembly 42 is disposed between the first conveying roller 41 and the first cutting assembly 43 and is configured to heat at least one side of the first electrode plate 100, thereby enabling the first conveying mechanism 4 to convey the preheated and presized first electrode plate 100 into the first rolling mechanism 1. A first clamping assembly is disposed upstream of the first cutting assembly 43, which may clamp the first electrode plate 100 to facilitate the conveyance of the first electrode plate 100 in cooperation with the first conveying roller 41 and ensure the stability of the position of the first electrode plate 100 during the cutting process of the first cutting assembly 43.

Similarly, the second conveying mechanism 5 includes a second conveying roller 51, a second heating assembly 52, a second cutting assembly 53, and a second manipulator. The second conveying roller 51 is configured to convey the continuous second electrode plate 200 to the second cutting assembly 53, the second cutting assembly 53 is configured to cut the second electrode plate 200 into a preset size, and the second manipulator is configured to feed the preset size of the second electrode plate 200 into the second rolling mechanism 2. The second heating assembly 52 is disposed between the second conveying roller 51 and the second cutting assembly 53 and is configured to heat at least one side of the second electrode plate 200, thereby enabling the second conveying mechanism 5 to convey the preheated second electrode plate 200 having a preset size into the second rolling mechanism 2. A second clamping assembly is disposed upstream of the second cutting assembly 53, which may clamp the second electrode plate 200 to facilitate the conveyance of the second electrode plate 200 in cooperation with the second conveying roller 51 and ensure the stability of the position of the second electrode plate 200 during the cutting process of the second cutting assembly 53.

The first heating assembly 42 includes two heating plates, which are respectively located on both sides of the first electrode plate 100, so as to evenly heat both sides of the first electrode plate 100, allowing the first electrode plate 100 to heat the two membranes 300 respectively. Similarly, the second heating assembly 52 includes two heating plates, which are respectively located on both sides of the second electrode plate 200, such that the second electrode plate 200 can quickly reach a preset temperature, thus improving heating efficiency, and also making the structure of the second conveying mechanism 5 more compact.

The first conveying mechanism 4 includes a first defect detection assembly 44, a first marking assembly 46, a first identification assembly 47, and a first grasping mechanism. The first defect detection assembly 44 detects defects on the continuous first electrode plate 100. The first marking assembly 46 marks the defects on the first electrode plate 100. The first identification assembly 47 identifies the mark on the first electrode plate 100 and enable the first grasping mechanism to remove the marked first electrode plate 100 after the first cutting assembly 43 cuts the first electrode plate 100, that is, to remove the defective first electrode plate 100 before it combines with the membrane 300. The first defect detection assembly 44 includes two detection elements, which are located on both sides of the first electrode plate 100 to detect the defects on both sides of the first electrode plate 100, ensuring that there are no defects on both sides of the first electrode plate 100. The first marking assembly 46 is an inkjet component, a marking component, etc., to mark the defect position on the first electrode plate 100. Correspondingly, the first identification assembly 47 is a color mark identification sensor, which identifies whether there is a mark on the first electrode plate 100 made by the first marking assembly 46 to determine whether there is a defect on the first electrode plate 100. When the first identification component 47 identifies a mark, the first cutting component 43 cuts the first electrode plate 100 first, and the first grasping component then takes away the defective first electrode plate 100 and places it in the waste recycling position. The defect detection component needs to be aligned with light, and the defect detection camera is 300-1600mm from the detection position. In one embodiment, the camera pixel is 4k-32k.

In this embodiment, the first marking assembly 46 is disposed upstream of the first heating assembly 42, and the first identification assembly 47 is disposed downstream of the first heating assembly 42 and upstream of the first cutting assembly 43. The first conveying mechanism 4 includes two first marking assemblies 46, which are respectively located on both sides of the first electrode plate 100 to mark defects on both sides. Correspondingly, the first conveying mechanism 4 also includes two first identification assemblies 47, which are respectively located on both sides of the first electrode plate 100 to identify the marks of the two first marking assemblies 46 correspondingly.

In some embodiments, the first conveying mechanism 4 may not be provided with a first grasping assembly, and the removal process of defective first electrode plates 100 may be implemented by a first manipulator.

Similarly, the second conveying mechanism 5 also includes a second defect detection assembly 54, a second marking assembly 56, a second identification assembly 57, and a second grasping mechanism. The second defect detection assembly 54 detect defects on the continuous second electrode plate 200, the second marking assembly 56 marks the defects on the second electrode plate 200, the second identification assembly 57 identifies the mark on the second electrode plate 200, and the second grasping mechanism takes away the marked second electrode plate 200 after the second cutting assembly 53 cuts the second electrode plate 200. That is, before the second electrode plate 200 is combined with the membrane 300, the defective second electrode plate 200 is removed. The second defect detection assembly 54 includes two detection elements, which are located on both sides of the second electrode plate 200 to detect both sides of the second electrode plate 200, ensuring that both sides of the second electrode plate 200 are free of defects. The second marking assembly 56 is an inkjet component, a marking component, etc., to mark the defective position of the second electrode plate 200. Correspondingly, the second identification component 57 is a color mark sensor, which may identify whether the second electrode plate 200 has defects by identifying whether there is a mark made by the second marking component 56 on the second electrode plate 200. When the second identification component 57 identifies a mark, the second cutting component 53 first cuts the second electrode plate 200, and then the second grasping component takes the defective second electrode plate 200 to the waste recycling position.

In this embodiment, the second marking assembly 56 is disposed upstream of the second heating assembly 52, and the second identification assembly 57 is disposed downstream of the second heating assembly 52 and upstream of the second cutting assembly 53. The second conveying mechanism 5 includes two second marking assemblies 56, which are respectively located on both sides of the second electrode plate 200 to mark defects on both sides. Correspondingly, the second conveying mechanism 5 also includes two second identification assemblies 57, which are respectively located on both sides of the second electrode plate 200 to identify the marks of the two second marking assemblies 56.

In some embodiments, the second conveying mechanism 5 may not be provided with a second grasping assembly, and the removal process of defective second electrode plates 200 may be implemented by a second manipulator.

As shown in Figure 1, the first conveying mechanism 4 is provided with a first deviation-correction assembly 45, which may correct the position of the first electrode plate 100 and prevent the continuous first electrode plate 100 from being misaligned during conveyance. The second conveying mechanism 5 is provided with a second deviation-correction assembly 55, which may correct the position of the second electrode plate 200 and prevent the continuous second electrode plate 200 from being misaligned during conveyance. The first deviation-correction assembly 45 and the second deviation-correction assembly 55 may be any of the relevant technologies, and are not limited here.

In this embodiment, as shown in Figure 1, the first rolling mechanism 1 includes two relatively rotatable first pressing rollers 11, and the membrane 300 passes between the two first pressing rollers 11. The thermal composite lamination device also includes a rolling dust-sticking mechanism 10, which is configured to clean the first pressing roller 11. The dust on the surface of the membrane 300 may adhere to the first pressing roller 11, and the dust on the first pressing roller 11 may adhere to the rolling dust-sticking mechanism 10 , thereby ensuring the cleanliness of the membrane 300, and thus eliminating the need for a polyethylene glycol terephthalate (PET) film, simplifying the structure of the thermal composite lamination device. In this embodiment, as shown in Figure 1, the rolling dust-sticking mechanism 10 includes a primary dust-sticking roller 101 and a secondary dust-sticking roller 102. The primary dust-sticking roller 101 is a soft dust-sticking roller, such as soft silicone, which has good dust-sticking effect but low viscosity. During operation, the primary dust-sticking roller 101 is in contact with the first pressing roller 11 and rotates in the opposite direction. The linear velocity of the primary dust-sticking roller 101 is the same as or has a small difference from that of the first pressing roller 11, so that the dust on the first pressing roller 11 is stuck to the primary dust-sticking roller 101. The secondary dust-sticking roller 102 is a hard dust-sticking roller wrapped with dozens of layers of high-viscosity dust-sticking paper. During operation, the secondary dust-sticking roller 102 is in contact with the primary dust-sticking roller 101 and rotates in the opposite direction, thereby sticking the dust on the primary dust-sticking roller 101 to the dust-sticking paper. During later cleaning, only one layer of dust-sticking paper needs to be torn off, resulting in good dust removal and convenient operation.

As shown in Figure 2, the second rolling mechanism 2 includes two relatively rotatable second pressing rollers 21, and the second electrode plate 200 and the intermediate composite 400 pass between the two second pressing rollers 21. The second pressing roller 21 is also provided with a rolling dust-sticking mechanism 10, which may clean the second pressing roller 21. The dust on the surface of the second electrode plate 200 and debris attached to the second electrode plate 200 during cutting may adhere to the second pressing roller 21. The dust and debris on the second pressing roller 21 may adhere to the rolling dust-sticking mechanism 10, thereby ensuring the cleanliness of the second electrode plate 200, and thus eliminating the need for a PET film, simplifying the structure of the thermal composite lamination device. The structure and working principle of the rolling dust-sticking mechanism 10 at the second pressing roller 21 are the same as those of the rolling dust-sticking mechanism 10 at the first pressing roller 11, and are not further described here.

As shown in Figure 1 and Figure 3, the laminating mechanism 7 includes a material box 71 and a blowing assembly 72. The upper end of the material box 71 is provided with an opening, and the main conveying mechanism 3 drives the strip 500 to enter the material box 71 vertically through the opening. The blowing assembly 72 is disposed on one side of the material box 71. As shown in Figure 3, when the end of the strip 500 enters the upper end of the material box 71, the blowing assembly 72 blows air to the other side of the material box 71, thereby blowing the end of the strip 500 to abut against the other side of the material box 71. Then, the strip 500 abuts against the material box 71 and continues to move downward, achieving the positioning of the first unit piece 502. Then the blowing assembly 72 stops blowing, and the material strip 500 falls freely and folds in a Z shape, allowing the unit pieces 502 to be stacked in sequence in the material box 71. When the unit pieces 502 are stacked to a predetermined number, the material strip 500 may be cut. At this point, the material box 71 filled with unit pieces 502 leaves below the material strip 500, and the empty material box 71 moves back underneath the material strip 500, ensuring continuous stacking process, reducing waiting time, and improving production efficiency.

As shown in Figure 1, the laminating mechanism 7 also includes a reflector 73 and a position detection assembly 74. The reflector 73 is disposed on the upper side of the material box 71 and located on both sides of the material strip 500. The position detection assembly 74 may emit a detection light, which is reflected by the reflector 73 and irradiates on the unit piece 502. The position detection assembly 74 may detect the position of the edge of the unit piece 502, thereby determining whether the unit piece 502 has a misalignment problem. By using the reflector 73, the position of the position detection assembly 74 may be flexibly set, avoiding interference between the position detection assembly 74 and the material strip 500 before stacking, ensuring accurate detection. In this embodiment, the position detection assembly 74 may be a charge-coupled device (CCD) camera or a position sensor. The position detection component 74 may emit a detection light in the horizontal direction, and the reflector 73 is inclined at an angle of 45°, so that the detection light is vertically illuminated on the unit piece 502. In other embodiments, the inclination angle of the reflector 73 may be flexibly adjusted according to the actual placement position of the detection assembly and the direction of the emitted detection light, which is not limited here.

The thermal composite lamination device also includes a rejection mechanism, which is configured to reject defective unit pieces 502. The rejection mechanism includes a third defect detection assembly 81, a membrane cutting assembly, and a rejection assembly 82. The third defect detection assembly 81 is disposed between the second rolling mechanism 2 and the laminating mechanism 7. The third defect detection assembly 81 may detect defects in the unit pieces 502. The membrane cutting assembly is disposed on the upper side of the material box 71, and may cut the membrane segment 501 downstream of a defective unit piece 502. The rejection assembly 82 may cut the membrane segment 501 upstream of a defective unit piece 502, and drive the defective unit piece 502 away from the upper side of the material box 71, thereby preventing the defective unit piece 502 from being stacked into the material box 71. The third defect detection component 81 includes a panoramic detection element 811 and a short-circuit detection element 812. The panoramic detection element 811 is configured to detect defects such as the shape and positional accuracy of the unit piece 502, and the short-circuit detection element 812 detects whether the unit piece 502 has a short circuit problem. As long as any one of the detection results of the panoramic detection element 811 and the short-circuit detection element 812 is unacceptable, the unit piece 502 is marked as having defects.

The membrane cutting assembly is a telescopic structure. When not in use, the membrane cutting assembly retracts and leaves the upper side of the material box 71 to get out of the way of the material strip 500. When in use, the membrane cutting structure extends above the material box 71 and cuts the membrane segment 501. The rejecting assembly 82 includes a retractable carrier and a cutting assembly disposed on the carrier. When it is necessary to reject a defective unit piece 502, and after the membrane cutting assembly cuts off the membrane segment 501 downstream of the unit piece 502, the carrier extends under the defective unit piece 502, and the cutting assembly cuts off the membrane segment 501 upstream of the defective unit piece 502. At this point, the defective unit piece 502 falls onto the carrier, and the carrier retracts to remove the defective unit piece 502.

Due to the predetermined number of stacking layers in the final stacking body formed in the material box 71, and the corresponding arrangement order of the first type of unit pieces 5021 and the second type of unit pieces 5022 on the strip 500, if the strip 500 continues to be stacked directly into the material box 71 after removing defective unit pieces 502, it may not be guaranteed that the final stacking body will be a structure in which the cathode covers the anode.

The thermal composite lamination device also includes a patch mechanism 9, which may supplement a prepared unit piece 502 into the material box 71. When a defective unit piece 502 is removed, a corresponding unit piece 502 of the same type as the removed defective unit piece 502 may be replenished into the material box 71, thus ensuring that the subsequent stacking of the strip 500 may proceed smoothly. The patch mechanism 9 includes a supplement cartridge 91, an alignment platform 92, and a patch manipulator. The supplement cartridge 91 is provided with unit pieces 502. The patch manipulator may grasp a unit piece 502 from the supplement cartridge 91 and place it on the alignment platform 92. The alignment platform 92 may position and identify the unit piece 502. Then, the patch manipulator grasps the positioned unit piece 502 on the alignment platform 92, adjusts its posture, and places it in the material box 71, thus ensuring the positional accuracy of the unit pieces 502. In this embodiment, the patch mechanism 9 includes two supplement cartridges 91, one of which contains the first type of unit piece 5021, and the other contains the second type of unit piece 5022. When a defective unit piece 502 is removed from the strip 500, the patch manipulator grabs a unit piece 502 of the same type as the removed unit piece 502 from the corresponding material box 71 to fill in the gap.

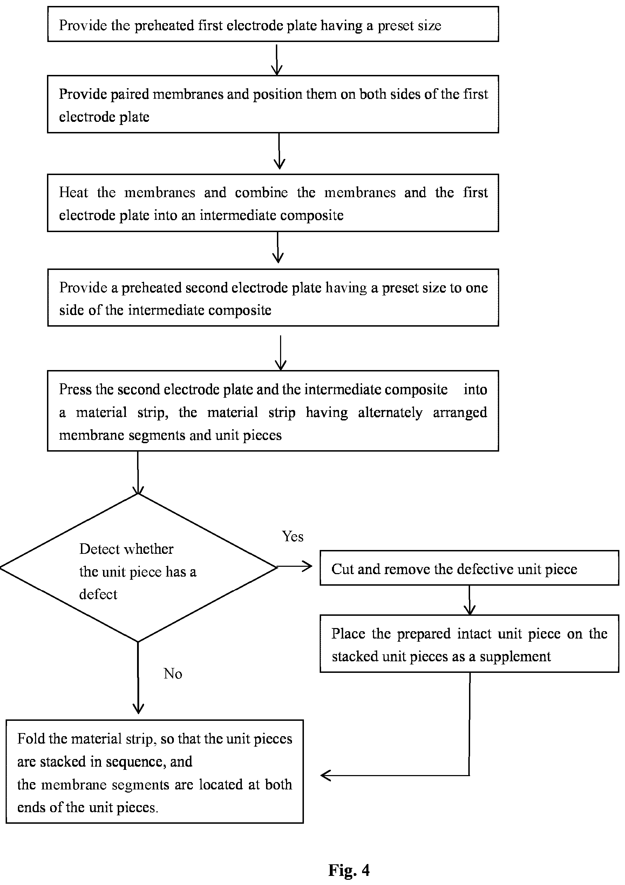

As shown in Figure 4, a thermal composite lamination method is disclosed, including:
providing a first electrode plate 100 that has been preheated and has a preset size; providing paired membranes 300, and positioning the paired membranes 300 on either side of the first electrode plate 100; heating the membranes 300 and combining the membranes 300 and the first electrode plate 100 into an intermediate composite 400; providing a second electrode plate 200 that has been preheated and has a preset size to one side of the intermediate composite 400; pressing the second electrode plate 200 and the intermediate composite 400 into a strip 500, the strip 500 having alternately arranged membrane segments 501 and unit pieces 502; folding the strip 500 so that the unit pieces 502 are stacked in sequence, with the membrane segments 501 located at both ends of the unit pieces 502.

The thermal lamination method preheats the first electrode plate 100 before thermal lamination of the membrane 300 and the first electrode plate 100, and preheats the second electrode plate 200 before pressing the intermediate composite 400 and the second electrode plate 200 together. Therefore, the thermal pressing length in the thermal lamination process of the intermediate composite 400 may be reduced, and the heating power may be reduced, making the thermal lamination device more compact. In addition, heating the membrane 300 by the preheated first electrode plate 100 from the inside to the outside and the reduction in power during the hot pressing process of the intermediate composite 400 are both beneficial to reduce heat loss during the entire hot pressing process.

The thermal composite lamination method further comprises:
Before folding the material strip 500, the detection unit 502 is used to detect whether there are defects. When a defective unit 502 is detected, the defective unit 502 is cut off and removed during the folding of the material strip 500, and a prepared intact unit piece 502 is placed on the stacked unit pieces 502 as a supplement.

As the unit pieces 502 on the material strip 500 include two types of unit pieces, the first type of unit pieces 5021 and the second type of unit piece 5022, the prepared intact unit pieces 502 should also include these two types of unit pieces 5021 and 5022. By removing defective unit pieces 502 and supplementing intact unit pieces 502, the stacking order of the first type of unit pieces 5021 and the second type of unit pieces 5022 in the final formed stack is maintained, thereby ensuring that the formed stack may be a structure in which the negative electrode coats the positive electrode.

A battery cell manufactured by the above-mentioned thermal composite lamination method is also disclosed. The battery cell includes two layers of oppositely arranged continuous membranes, with a plurality of first electrode plates 100 arranged at intervals between the two layers of continuous membranes to form a plurality of spaced-apart intermediate composites 400 on the continuous membrane. The second electrode plates 200 are discontinuously distributed on the first surface or second surface of the intermediate composite 400, and are asymmetrically distributed on the first surface and second surface of the intermediate composite 400. The battery cell is obtained by Z-folding the intermediate composite 400 in sequence.

## Claims

1. A thermal composite lamination device, comprising:
a first rolling mechanism (1);
a second rolling mechanism (2);
a main conveying mechanism (3) configured to convey paired membranes (300) along a preset trajectory, such that the paired membranes (300) sequentially pass through the first rolling mechanism (1) and the second rolling mechanism (2);
a first conveying mechanism (4) configured to feed, into the first rolling mechanism (1), a first electrode plate (100) which is preheated and has a preset size, and to clamp the first electrode plate (100) between the paired membranes (300);
a heating and conveying mechanism (6) provided between the first rolling mechanism (1) and the second rolling mechanism (2), configured to combine the paired membranes (300) and the first electrode plate (100) into an intermediate composite (400);
a second conveying mechanism (5) configured to feed, into the second rolling mechanism (2), a second electrode plate (200) which is preheated and has a preset size, and enable the second electrode plate (200) to be located on an outer side of the paired membranes (300), the second rolling mechanism (2) being configured to press the second electrode plate (200) and the intermediate composite (400) into a material strip (500);
wherein at least one of the following conditions is met:
the first conveying mechanism (4) includes a first conveying roller (41), a first heating assembly (42), a first cutting assembly (43), and a first manipulator; the first conveying roller (41) is configured to convey a continuous first electrode plate (100); the first cutting assembly (43) is configured to cut the continuous first electrode plate (100) into a preset size; the first manipulator is configured to feed the first electrode plate (100) having the preset size into the first rolling mechanism (1); the first heating assembly (42) is disposed between the first conveying roller **(41)** and the first cutting assembly (43) and is configured to heat at least one side of the continuous first electrode plate (100);
the second conveying mechanism (5) including a second conveying roller (51), a second heating assembly (52), a second cutting assembly (53), and a second manipulator; the second conveying roller (51) is configured to convey a continuous second electrode plate (200), the second cutting assembly (53) is configured to cut the continuous second electrode plate (200) into a preset size, the second manipulator is configured to feed the second electrode plate (200) having the preset size into the second rolling mechanism (2), and the second heating assembly (52) is disposed between the second conveying roller (51) and the second cutting assembly (53) and configured to heat at least one side of the continuous second electrode plate (200) ;
**characterized in that** at least one of the following conditions is met:
the first conveying mechanism (4) further includes a first defect detection assembly (44), a first marking assembly (46), a first identification assembly (47) and a first grasping mechanism; the first defect detection assembly (44) is configured to detect defects on the continuous first electrode plate (100); the first marking assembly (46) is configured to mark defects on the continuous first electrode plate (100); the first identification assembly (47) is configured to identify the mark on the continuous first electrode plate (100) and cause the first grasping mechanism to remove the marked first electrode plate (100) after the first cutting assembly (43) cuts the continuous first electrode plate (100);
the second conveying mechanism (5) further includes a second defect detection assembly (54), a second marking assembly (56), a second identification assembly (57), and a second grasping mechanism; the second defect detection assembly (54) is configured to detect defects on the continuous second electrode plate (200); the second marking assembly (56) is configured to mark defects on the continuous second electrode plate (200); the second identification assembly (57) is configured to identify the mark on the continuous second electrode plate (200) and cause the second grasping mechanism to remove the marked second electrode plate (200) after the second cutting assembly (53) cuts the continuous second electrode plate (200).

2. The thermal composite lamination device according to claim 1, wherein at least one of the following conditions is met:
the first rolling mechanism (1) includes two first pressing rollers (11) that may rotate relative to each other, and the paired membranes (300) pass between the two first pressing rollers (11); the thermal composite lamination device also includes a rolling dust-sticking mechanism (10), which is configured to clean the first pressing rollers (11);
the second rolling mechanism (2) includes two second pressing rollers (21) that may rotate relative to each other, and the second electrode plate (200) and the intermediate composite (400) pass between the two second pressing rollers (21); the thermal composite lamination device also includes a rolling dust-sticking mechanism (10), which is configured to clean the second pressing rollers (21).

3. The thermal composite lamination device according to any one of claims 1 to 2, wherein the material strip (500) comprises alternately arranged membrane segments (501) and unit pieces (502); the thermal composite lamination device further comprises a laminating mechanism (7) arranged downstream of the second rolling mechanism (2), and the laminating mechanism (7) comprises:
a material box (71) with an opening at the upper end, and the main conveying mechanism (3) is further configured to drive the material strip (500) to enter the material box (71) vertically through the opening;
a blowing assembly (72) disposed on one side of the material box (71), the blowing assembly (72) being configured to blow air to the other side of the material box (71) so that the end of the material strip (500) abuts against the other side, and after the blowing assembly (72) stops blowing air, the material strip (500) is folded in a Z shape, and the unit pieces (502) of the material strip (500) are sequentially stacked on the material box (71).

4. The thermal composite lamination device according to claim 3, wherein the laminating mechanism (7) further comprises:
a reflector (73) arranged on the upper side of the material box (71) and located on both sides of the material strip (500);
a position detection assembly (74) configured to emit a detection light, the detection light being reflected by the reflector(73) and then irradiating the unit piece (502), the position detection assembly (74) being configured to detect the position of the unit piece (502).

5. The thermal composite lamination device according to claim 3, further comprising a rejection mechanism configured to reject defective unit pieces (502);
wherein the rejection mechanism comprises:
a third defect detection assembly (81) disposed between the second rolling mechanism (2) and the laminating mechanism (7), the third defect detection assembly (81) being configured to detect defects on the unit pieces (502) of the material strip (500);
a membrane cutting assembly, disposed on the upper side of the material box (71), configured to cut the membrane segments (501) downstream of the defective unit pieces (502);
a rejection assembly (82), configured to cut the membrane segments (501) upstream of the defective unit pieces (502), and drive the defective unit pieces (502) away from the upper part of the material box (71).

6. The thermal composite lamination device according to claim 3, further comprising a patch mechanism (9) configured to supplement a prepared unit piece (502) into the material box (71);
the patch mechanism (9) comprises:
a supplement cartridge (91) having a unit piece (502) arranged therein;
an alignment platform (92) configured to position the unit piece (502) placed on the alignment platform (92);
a patch manipulator, configured to grasp the unit piece (502) from the supplement cartridge (91) and place it onto the alignment platform (92) for positioning, and grasp the unit piece (502) on the alignment platform (92) and adjust its posture before placing it into the material box (71).

## Patentansprüche

1. Thermische Verbundlaminierungsvorrichtung, umfassend:
einen ersten Rollmechanismus (1);
einen zweiten Rollmechanismus (2);
einen Hauptfördermechanismus (3), der dazu konfiguriert ist, gepaarte Membranen (300) entlang einer voreingestellten Trajektorie zu fördern, sodass die gepaarten Membranen (300) sequentiell durch den ersten Rollmechanismus (1) und den zweiten Rollmechanismus (2) verlaufen;
einen ersten Fördermechanismus (4), der dazu konfiguriert ist, in den ersten Rollmechanismus (1) einzuspeisen, eine erste Elektrodenplatte (100), die vorgewärmt ist und eine voreingestellte Größe aufweist, und um die erste Elektrodenplatte (100) zwischen den gepaarten Membranen (300) zu klemmen;
einen Erwärmungs- und Fördermechanismus (6), der zwischen dem ersten Rollmechanismus (1) und dem zweiten Rollmechanismus (2) bereitgestellt ist, der dazu konfiguriert ist, die gepaarten Membranen (300) und die erste Elektrodenplatte (100) zu einem Zwischenverbund (400) zu kombinieren;
einen zweiten Fördermechanismus (5), der dazu konfiguriert ist, in den zweiten Rollmechanismus (2) eine zweite Elektrodenplatte (200), die vorgewärmt ist und eine voreingestellte Größe aufweist, einzuspeisen und zu ermöglichen, dass sich die zweite Elektrodenplatte (200) auf einer Außenseite der gepaarten Membranen (300) befindet, wobei der zweite Rollmechanismus (2) dazu konfiguriert ist, die zweite Elektrodenplatte (200) und den Zwischenverbund (400) zu einem Materialstreifen (500) zu pressen;
wobei zumindest eine der folgenden Bedingungen erfüllt ist:
der erste Fördermechanismus (4) beinhaltet eine erste Förderrolle (41), eine erste Erwärmungsbaugruppe (42) und eine erste Schneidbaugruppe (43) und einen ersten Manipulator; die erste Förderrolle (41) ist dazu konfiguriert, eine kontinuierliche erste Elektrodenplatte (100) zu fördern; die erste Schneidbaugruppe (43) ist dazu konfiguriert, die kontinuierliche erste Elektrodenplatte (100) in eine voreingestellte Größe zu schneiden; der erste Manipulator ist dazu konfiguriert, die erste Elektrodenplatte (100) mit der voreingestellten Größe in den ersten Rollmechanismus (1) einzuspeisen; die erste Erwärmungsbaugruppe (42) ist zwischen der ersten Förderrolle (41) und der ersten Schneidbaugruppe (43) vorgesehen und ist dazu konfiguriert, zumindest eine Seite der kontinuierlichen ersten Elektrodenplatte (100) zu erwärmen;
der zweite Fördermechanismus (5) beinhaltet eine zweite Förderrolle (51), eine zweite Erwärmungsbaugruppe (52), eine zweite Schneidbaugruppe (53) und einen zweiten Manipulator; die zweite Förderrolle (51) ist dazu konfiguriert, eine kontinuierliche zweite Elektrodenplatte (200) zu fördern, die zweite Schneidbaugruppe (53) ist dazu konfiguriert, die kontinuierliche zweite Elektrodenplatte (200) in eine voreingestellte Größe zu schneiden, der zweite Manipulator ist dazu konfiguriert, die zweite Elektrodenplatte (200) mit der voreingestellten Größe in den zweiten Rollmechanismus (2) einzuspeisen, und die zweite Erwärmungsbaugruppe (52) ist zwischen der zweiten Förderrolle (51) und der zweiten Schneidbaugruppe (53) vorgesehen und dazu konfiguriert, zumindest eine Seite der kontinuierlichen zweiten Elektrodenplatte (200) zu erwärmen;
**dadurch gekennzeichnet, dass** zumindest eine der folgenden Bedingungen erfüllt ist:
der erste Fördermechanismus (4) beinhaltet ferner eine erste Defektdetektionsbaugruppe (44), eine erste Markierungsbaugruppe (46), eine erste Identifizierungsbaugruppe (47) und einen ersten Greifmechanismus; die erste Defektdetektionsbaugruppe (44) ist dazu konfiguriert, Defekte auf der kontinuierlichen ersten Elektrodenplatte (100) zu detektieren; die erste Markierungsbaugruppe (46) ist dazu konfiguriert, Defekte auf der kontinuierlichen ersten Elektrodenplatte (100) zu markieren; die erste Identifizierungsbaugruppe (47) ist dazu konfiguriert, die Markierung auf der kontinuierlichen ersten Elektrodenplatte (100) zu identifizieren und zu bewirken, dass der erste Greifmechanismus die markierte erste Elektrodenplatte (100) entfernt, nachdem die erste Schneidbaugruppe (43) die kontinuierliche erste Elektrodenplatte (100) geschnitten hat;
der zweite Fördermechanismus (5) beinhaltet ferner eine zweite Defektdetektionsbaugruppe (54), eine zweite Markierungsbaugruppe (56), eine zweite Identifizierungsbaugruppe (57) und einen zweiten Greifmechanismus; die zweite Defektdetektionsbaugruppe (54) ist dazu konfiguriert, Defekte auf der kontinuierlichen zweiten Elektrodenplatte (200) zu detektieren; die zweite Markierungsbaugruppe (56) ist dazu konfiguriert, Defekte auf der kontinuierlichen zweiten Elektrodenplatte (200) zu markieren; die zweite Identifizierungsbaugruppe (57) ist dazu konfiguriert, die Markierung auf der kontinuierlichen zweiten Elektrodenplatte (200) zu identifizieren und zu bewirken, dass der zweite Greifmechanismus die markierte zweite Elektrodenplatte (200) entfernt, nachdem die zweite Schneidbaugruppe (53) die kontinuierliche zweite Elektrodenplatte (200) geschnitten hat.

2. Thermische Verbundlaminierungsvorrichtung nach Anspruch 1, wobei zumindest eine der folgenden Bedingungen erfüllt ist:
der erste Rollmechanismus (1) beinhaltet zwei erste Pressrollen (11), die sich relativ zueinander drehen können, und die gepaarten Membranen (300) verlaufen zwischen den zwei ersten Pressrollen (11); die thermische Verbundlaminierungsvorrichtung beinhaltet auch einen Rollstaubanhaftungsmechanismus (10), der dazu konfiguriert ist, die ersten Pressrollen (11) zu reinigen;
der zweite Rollmechanismus (2) beinhaltet zwei zweite Pressrollen (21), die sich relativ zueinander drehen können, und die zweite Elektrodenplatte (200) und der Zwischenverbund (400) verlaufen zwischen den zwei zweiten Pressrollen (21); die thermische Verbundlaminierungsvorrichtung beinhaltet auch einen Rollstaubanhaftungsmechanismus (10), der dazu konfiguriert ist, die zweiten Pressrollen (21) zu reinigen.

3. Thermische Verbundlaminierungsvorrichtung nach einem der Ansprüche 1 bis 2, wobei der Materialstreifen (500) alternierend angeordnete Membransegmente (501) und Einheitsstücke (502) umfasst; wobei die thermische Verbundlaminierungsvorrichtung ferner einen Laminierungsmechanismus (7) umfasst, der stromabwärts des zweiten Rollmechanismus (2) angeordnet ist, und der Laminierungsmechanismus (7) Folgendes umfasst:
eine Materialbox (71) mit einer Öffnung an dem oberen Ende, wobei der Hauptfördermechanismus (3) ferner dazu konfiguriert ist, den Materialstreifen (500) anzutreiben, um in die Materialbox (71) vertikal durch die Öffnung einzutreten;
eine Blasbaugruppe (72), die an einer Seite der Materialbox (71) vorgesehen ist, wobei die Blasbaugruppe (72) dazu konfiguriert ist, Luft auf die andere Seite der Materialbox (71) zu blasen, sodass das Ende des Materialstreifens (500) an der anderen Seite anliegt, und nachdem die Blasbaugruppe (72) das Blasen von Luft stoppt, der Materialstreifen (500) in einer Z-Form gefaltet wird und die Einheitsstücke (502) des Materialstreifens (500) sequentiell auf der Materialbox (71) gestapelt werden.

4. Thermische Verbundlaminierungsvorrichtung nach Anspruch 3, wobei der Laminierungsmechanismus (7) ferner Folgendes umfasst:
einen Reflektor (73), der an der Oberseite der Materialbox (71) angeordnet ist und sich auf beiden Seiten des Materialstreifens (500) befindet;
eine Positionsdetektionsbaugruppe (74), die dazu konfiguriert ist, ein Detektionslicht zu emittieren, wobei das Detektionslicht durch den Reflektor (73) reflektiert wird und dann das Einheitsstück (502) bestrahlt, wobei die Positionsdetektionsbaugruppe (74) dazu konfiguriert ist, die Position des Einheitsstücks (502) zu detektieren.

5. Thermische Verbundlaminierungsvorrichtung nach Anspruch 3, ferner umfassend einen Aussortiermechanismus, der dazu konfiguriert ist, defekte Einheitsstücke (502) zurückzuweisen;
wobei der Aussortiermechanismus Folgendes umfasst:
eine dritte Defektdetektionsbaugruppe (81), die zwischen dem zweiten Rollmechanismus (2) und dem Laminierungsmechanismus (7) vorgesehen ist, wobei die dritte Defektdetektionsbaugruppe (81) dazu konfiguriert ist, Defekte an den Einheitsstücken (502) des Materialstreifens (500) zu detektieren;
eine Membranschneidbaugruppe, die an der Oberseite der Materialbox (71) vorgesehen ist, die dazu konfiguriert ist, die Membransegmente (501) stromabwärts der defekten Einheitsstücke (502) zu schneiden;
eine Aussortierbaugruppe (82), die dazu konfiguriert ist, die Membransegmente (501) stromaufwärts der defekten Einheitsstücke (502) zu schneiden und die defekten Einheitsstücke (502) von dem oberen Teil der Materialbox (71) wegzubewegen.

6. Thermische Verbundlaminierungsvorrichtung nach Anspruch 3, ferner umfassend einen Ergänzungsmechanismus (9), der dazu konfiguriert ist, ein vorbereitetes Einheitsstück (502) in der Materialbox (71) zu ergänzen;
wobei der Ergänzungsmechanismus (9) Folgendes umfasst:
eine Ergänzungskartusche (91) mit einem darin angeordneten Einheitsstück (502);
eine Ausrichtungsplattform (92), die dazu konfiguriert ist, das Einheitsstück (502), das auf der Ausrichtungsplattform (92) platziert ist, zu positionieren;
einen Patch-Manipulator, der dazu konfiguriert ist, das Einheitsstück (502) von der Ergänzungskartusche (91) zu greifen und es auf der Ausrichtungsplattform (92) zum Positionieren zu platzieren und das Einheitsstück (502) auf der Ausrichtungsplattform (92) zu greifen und seine Stellung einzustellen, bevor es in der Materialbox (71) platziert wird.

## Revendications

1. Dispositif de stratification composite thermique, comprenant :
un premier mécanisme de roulement (1) ;
un second mécanisme de roulement (2) ;
un mécanisme de transport principal (3) conçu pour transporter des membranes appariées (300) le long d'une trajectoire prédéfinie, de sorte que les membranes appariées (300) passent séquentiellement à travers le premier mécanisme de roulement (1) et le second mécanisme de roulement (2) ;
un premier mécanisme de transport (4) conçu pour introduire, dans le premier mécanisme de roulement (1), une première plaque d'électrode (100) qui est préchauffée et possède une taille prédéfinie, et pour serrer la première plaque d'électrode (100) entre les membranes appariées (300) ;
un mécanisme de chauffage et de transport (6) prévu entre le premier mécanisme de roulement (1) et le second mécanisme de roulement (2), conçu pour combiner les membranes appariées (300) et la première plaque d'électrode (100) en un composite intermédiaire (400) ;
un second mécanisme de transport (5) conçu pour introduire, dans le second mécanisme de roulement (2), une seconde plaque d'électrode (200) qui est préchauffée et possède une taille prédéfinie, et pour permettre à la seconde plaque d'électrode (200) d'être située sur un côté externe des membranes appariées (300), le second mécanisme de roulement (2) étant conçu pour presser la seconde plaque d'électrode (200) et le composite intermédiaire (400) dans une bande de matériau (500) ;
au moins l'une des conditions suivantes étant remplie :
le premier mécanisme de transport (4) comprend un premier rouleau de transport (41), un premier ensemble de chauffage (42), un premier ensemble de coupe (43) et un premier manipulateur ; le premier rouleau de transport (41) est conçu pour transporter une première plaque d'électrode continue (100) ; le premier ensemble de coupe (43) étant conçu pour couper la première plaque d'électrode continue (100) en une taille prédéfinie ; le premier manipulateur étant conçu pour introduire la première plaque d'électrode (100) possédant la taille prédéfinie dans le premier mécanisme de roulement (1) ; le premier ensemble de chauffage (42) étant disposé entre le premier rouleau de transport (41) et le premier ensemble de coupe (43) et étant conçu pour chauffer au moins un côté de la première plaque d'électrode continue (100) ;
le second mécanisme de transport (5) comprenant un second rouleau de transport (51), un second ensemble de chauffage (52), un second ensemble de coupe (53) et un second manipulateur ; le second
rouleau de transport (51) est conçu pour transporter une seconde plaque d'électrode continue (200), le second ensemble de coupe (53) est conçu pour couper la seconde plaque d'électrode continue (200) en une taille prédéfinie, le second manipulateur est conçu pour introduire la seconde plaque d'électrode (200) possédant la taille prédéfinie dans le second mécanisme de roulement (2) et le second ensemble de chauffage (52) est disposé entre le second rouleau de transport (51) et le second ensemble de coupe (53) et conçu pour chauffer au moins un côté de la seconde plaque d'électrode continue (200) ;
**caractérisée en ce qu'**au moins l'une des conditions suivantes est remplie :
le premier mécanisme de transport (4) comprend en outre un premier ensemble de détection de défaut (44), un premier ensemble de marquage (46), un premier ensemble d'identification (47) et un premier mécanisme de préhension ; le premier ensemble de détection de défaut (44) est conçu pour détecter des défauts sur la première plaque d'électrode continue (100) ; le premier ensemble de marquage (46) est conçu pour marquer des défauts sur la première plaque d'électrode continue (100) ; le premier ensemble d'identification (47) est conçu pour identifier la marque sur la première plaque d'électrode continue (100) et amener le premier mécanisme de préhension à retirer la première plaque d'électrode marquée (100) après que le premier ensemble de coupe (43) coupe la première plaque d'électrode continue (100) ;
le second mécanisme de transport (5) comprend en outre un second ensemble de détection de défaut (54), un second ensemble de marquage (56), un second ensemble d'identification (57) et un second mécanisme de préhension ; le second ensemble de détection de défaut (54) est conçu pour détecter des défauts sur la seconde plaque d'électrode continue (200) ; le second ensemble de marquage (56) est conçu pour marquer des défauts sur la seconde plaque d'électrode continue (200) ; le second ensemble d'identification (57) est conçu pour identifier la marque sur la seconde plaque d'électrode continue (200) et pour amener le second mécanisme de préhension à retirer la seconde plaque d'électrode marquée (200) après que le second ensemble de coupe (53) coupe la seconde plaque d'électrode continue (200).

2. Dispositif de stratification composite thermique selon la revendication 1, au moins l'une des conditions suivantes étant remplie :
le premier mécanisme de roulement (1) comprend deux premiers rouleaux de pression (11) qui peuvent tourner l'un par rapport à l'autre, et les membranes appariées (300) passent entre les deux premiers rouleaux de pression (11) ; le dispositif de stratification composite thermique comprend également un mécanisme de collage de poussière de roulement (10) qui est conçu pour nettoyer les premiers rouleaux de pression (11) ;
le second mécanisme de roulement (2) comprend deux seconds rouleaux de pression (21) qui peuvent tourner l'un par rapport à l'autre, et la seconde plaque d'électrode (200) et le composite intermédiaire (400) passent entre les deux seconds rouleaux de pression (21) ; le dispositif de stratification composite thermique comprend également un mécanisme de collage de poussière de roulement (10), qui est conçu pour nettoyer les seconds rouleaux de pression (21).

3. Dispositif de stratification composite thermique selon l'une quelconque des revendications 1 à 2, ladite bande de matériau (500) comprenant des segments de membrane (501) et des pièces unitaires (502) agencés en alternance ; ledit dispositif de stratification composite thermique comprenant en outre un mécanisme de stratification (7) agencé en aval du second mécanisme de roulement (2), et ledit mécanisme de stratification (7) comprenant :
une boîte de matériau (71) avec une ouverture au niveau de l'extrémité supérieure, et le mécanisme de transport principal (3) est en outre conçu pour entraîner la bande de matériau (500) pour qu'elle entre dans la boîte de matériau (71) verticalement à travers l'ouverture ;
un ensemble de soufflage (72) disposé sur un côté de la boîte de matériau (71),
l'ensemble de soufflage (72) étant conçu pour souffler de l'air vers l'autre côté de la boîte de matériau (71) afin que l'extrémité de la bande de matériau (500) vienne en butée contre l'autre côté, et après que l'ensemble de soufflage (72) a cessé de souffler de l'air, la bande de matériau (500) est pliée en forme de Z, et les pièces unitaires (502) de la bande de matériau (500) sont empilées séquentiellement sur la boîte de matériau (71).

4. Dispositif de stratification composite thermique selon la revendication 3, ledit mécanisme de stratification (7) comprenant en outre :
un réflecteur (73) agencé sur le côté supérieur de la boîte de matériau (71) et situé sur les deux côtés de la bande de matériau (500) ;
un ensemble de détection de position (74) conçu pour émettre une lumière de détection, la lumière de détection étant réfléchie par le réflecteur (73) et irradiant ensuite la pièce unitaire (502), l'ensemble de détection de position (74) étant conçu pour détecter la position de la pièce unitaire (502).

5. Dispositif de stratification composite thermique selon la revendication 3, comprenant en outre un mécanisme de rejet conçu pour rejeter des pièces unitaires défectueuses (502) ;
ledit mécanisme de rejet comprenant :
un troisième ensemble de détection de défaut (81) disposé entre le second mécanisme de roulement (2) et le mécanisme de stratification (7), le troisième ensemble de détection de défaut (81) étant conçu pour détecter des défauts sur les pièces unitaires (502) de la bande de matériau (500) ;
un ensemble de coupe de membrane, disposé sur le côté supérieur de la boîte de matériau (71), conçu pour couper les segments de membrane (501) en aval des pièces unitaires défectueuses (502) ;
un ensemble de rejet (82), conçu pour couper les segments de membrane (501) en amont des pièces unitaires défectueuses (502), et pour éloigner les pièces unitaires défectueuses (502) de la partie supérieure de la boîte de matériau (71).

6. Dispositif de stratification composite thermique selon la revendication 3, comprenant en outre un mécanisme de retouche (9) conçu pour ajouter une pièce unitaire préparée (502) dans la boîte de matériau (71) ;
le mécanisme de retouche (9) comprend :
une cartouche de supplément (91) comportant une pièce unitaire (502) agencée à l'intérieur ;
une plate-forme d'alignement (92) conçue pour positionner la pièce unitaire (502) placée sur la plate-forme d'alignement (92) ;
un manipulateur de retouche, conçu pour saisir la pièce unitaire (502) de la cartouche de supplément (91) et la placer sur la plate-forme d'alignement (92) pour le positionnement, et pour saisir la pièce unitaire (502) sur la plate-forme d'alignement (92) et ajuster sa posture avant de la placer dans la boîte de matériau (71).
